# EUROPÄISCHE PATENTANMELDUNG

(11) **EP 4 664 214 A1**
(43) Veröffentlichungstag der Anmeldung: **17.12.2025**
(21) Anmeldenummer: 24181169.4
(22) Anmeldetag: 10.06.2024
(51) Int. Cl.: G05B 19/05

(54) **VERFAHREN ZUR ERZEUGUNG EINER AUTOMATISIERUNG**

(71) Anmelder: Siemens Aktiengesellschaft, 80333 München (DE)
(72) Erfinder: Farrell, Sean, 76133 Karlsruhe (DE)
(74) Vertreter: Siemens Patent Attorneys

(57) **Zusammenfassung**

Vorgeschlagen wird ein Verfahren zur Erzeugung einer Automatisierung (8) für eine technische Anlage, insbesondere Prozess- oder Fertigungsanlage, umfassend:
a) Richten einer Anforderung (4) zur Erzeugung der Automatisierung (8) an einen computerimplementierten Automatisierungsdienst (5) unter Einbezug eines Dateneingangsstromes (3) durch einen Nutzer (2) der technischen Anlage,
b) Erzeugen eines Datenausgangsstromes aus dem mit einer Auszeichnungssprache, insbesondere gemäß dem JSON-Datenaustauschformat, strukturierten Dateneingangsstrom (3) unter Nutzung eines neuronalen Netzwerkes (6) durch den computerimplementierten Automatisierungsdienst (5),
c) Strukturieren des zuvor erzeugten Datenausgangsstromes mit der Auszeichnungssprache, insbesondere gemäß dem JSON-Datenaustauschformat, durch den computerimplementierten Automatisierungsdienst (5),
d) Übermitteln des zuvor erzeugten strukturierten Datenausgangsstromes (7) an ein computerimplementiertes Projektierungswerkzeug (1),
e) Erzeugen der Automatisierung (8) für die technische Anlage auf Basis des strukturierten Datenausgangsstromes (7) durch das computerimplementierte Projektierungswerkzeug (1) oder durch ein weiteres computerimplementiertes Projektierungswerkzeug.

## Beschreibung

Die Erfindung betrifft ein Verfahren zur Erzeugung einer Automatisierung für eine technische Anlage, insbesondere Prozess- oder Fertigungsanlage. Die Erfindung betrifft ferner einen computerimplementierten Automatisierungsdienst und einen Engineering Station Server.

Große Sprachmodelle (Large Language Models, kurz: LLMs) sind wesentlich für KI-Assistenten (Künstliche Intelligenz), die hauptsächlich über natürliche Sprache interagieren und über bedeutende Fähigkeiten im Umgang mit strukturiertem Text und Programmiersprachen verfügen. Die Integration von LLMs in Anwendungen, die grafische Elemente enthalten - wie Geräte auf einer Anlagenfläche oder HMI (Human-Machine Interface)-Bildschirme - und grafische Programmiersprachen wie Continuous Function Chart (CFC) und Sequential Function Chart (SFC) umfassen, stellt jedoch eine bedeutende Herausforderung dar. Ein Kernproblem liegt darin, grafische und kontextbezogene Informationen in einem textuellen Format zu vermitteln, das LLMs effektiv verarbeiten können, um sinnvolle Operationen in diesen Umgebungen durchzuführen.

Bisher war die Integration von LLMs in solchen Kontexten begrenzt. Sie hängt hauptsächlich von maßgeschneiderten oder proprietären Lösungen ab. Einige bestehende LLM-Frameworks ermöglichen zwar die Registrierung von Plugins, um anwendungsspezifische Interaktionen zu erleichtern. Diese Lösungen sind jedoch im Allgemeinen nicht portabel und eng mit bestimmten Modellen gekoppelt, sodass ihnen ein modellunabhängiger Ansatz fehlt, der Interaktionen über verschiedene Kl-Implementierungen und grafische Programmierumgebungen standardisieren könnte.

Ausgehend hiervon ist es Aufgabe vorliegender Erfindung, ein vereinfachtes, effizienteres Verfahren zur Erzeugung einer Automatisierung anzugeben.

Die Lösung dieser Aufgabe gelingt durch ein Verfahren gemäß Patentanspruch 1. Außerdem wird die Aufgabe durch einen computerimplementierten Automatisierungsdienst und einen Engineering Station Server gelöst. Vorteilhafte Ausgestaltungen sind jeweils Gegenstand der Unteransprüche.

Ein erfindungsgemäßes Verfahren zur Erzeugung einer Automatisierung für eine technische Anlage, insbesondere Prozess- oder Fertigungsanlage, umfasst die folgenden Schritte:
a) Richten einer Anforderung zur Erzeugung der Automatisierung an einen computerimplementierten Automatisierungsdienst unter Einbezug eines Dateneingangsstromes durch einen Nutzer der technischen Anlage,
b) Erzeugen eines Datenausgangsstromes aus dem mit einer Auszeichnungssprache, insbesondere gemäß dem JSON-Datenaustauschformat, strukturierten Dateneingangsstrom unter Nutzung eines neuronalen Netzwerkes durch den computerimplementierten Automatisierungsdienst,
c) Strukturieren des zuvor erzeugten Datenausgangsstromes mit der Auszeichnungssprache, insbesondere gemäß dem JSON-Datenaustauschformat, durch den computerimplementierten Automatisierungsdienst,
d) Übermitteln des zuvor erzeugten strukturierten Datenausgangsstromes an ein computerimplementiertes Projektierungswerkzeug,
e) Erzeugen der Automatisierung für die technische Anlage auf Basis des Datenausgangsstromes durch das computerimplementierte Projektierungswerkzeug oder ein weiteres computerimplementiertes Projektierungswerkzeug.

Unter einer Automatisierung wird die selbständige (automatisierte) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten. Die Automatisierung umfasst wenigstens eine Parametrierung der Komponenten der Anlage und eine Interaktion der Komponenten mit weiteren Komponenten.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Datenbank oder ein Archiv, in dem historische Daten abgespeichert sind.

Unter einem Nutzer wird ein menschlicher Bediener des technischen Systems verstanden. Der Nutzer, beispielsweise ein Operator, Projekteur oder ein Administrator, interagiert mittels spezieller Benutzerschnittstellen mit dem technischen System bzw. dessen Leitsystem und steuert spezielle technische Funktionen des Systems. Hierzu kann der Nutzer ein Leitsystem der technischen Anlage nutzen.

Unter einer Auszeichnungssprache wird vorliegend eine Computersprache verstanden, die zur Strukturierung des jeweiligen Datenstromes verwendet werden kann. Sie kann beispielsweise Informationen über die Formatierung, das Layout, die Semantik und die Struktur des Datenstromes umfassen.

Unter einem neuronalen Netzwerk wird ein computergestütztes Modell verstanden, welches miteinander verbundene Neuronen umfasst, die Informationen verarbeiten und weiterleiten. Jedes Neuron erhält Eingangssignale, verarbeitet diese und gibt ein Ausgangssignal weiter. Die Verbindungen zwischen den Neuronen haben unterschiedliche Gewichtungen, die während des Trainingsprozesses angepasst werden, um das Netzwerk zu optimieren.

Die vorliegender Erfindung geht von der Erkenntnis aus, dass neuronale Netze besonders effizient im Kontext der Erzeugung einer Automatisierung eingesetzt werden können, wenn sie beim Richten einer Anforderung für die Erzeugung der Automatisierung über einen entsprechenden Kontext verfügen. Diesen Kontext können sie besonders effizient verarbeiten bzw. bereitstellen, wenn die Dateneingangsströme und/oder die Datenausgangsströme in bzw. aus dem neuronalen Netz gemäß einer Auszeichnungssprache, insbesondere dem JSON-Datenaustausch-format, strukturiert sind. Das JSON-Datenaustauschformat zeichnet sich dabei durch eine besonders hohe Kompaktheit der damit strukturierten Datenströme aus.

Der computerimplementierte Automatisierungsdienst nutzt dabei die Funktionalitäten des neuronalen Netzwerkes, um aus dem Dateneingangsstrom den Datenausgangsstrom zu erzeugen. Das neuronale Netzwerk kann dabei auf dem gleichen Computer implementiert sein wie der Automatisierungsdienst. Es ist aber auch möglich, dass das neuronale Netzwerk auf einer separaten, insbesondere cloudbasierten Rechenumgebung realisiert ist.

Bevorzugt entstammt der Dateneingangsstrom dabei einem computerimplementierten Projektierungswerkzeug, welches den Dateneingangsstrom wenigstens teilweise unter Nutzung einer grafisch orientierten Computersprache erzeugt hat, insbesondere eines Sequential Function Charts gemäß der Norm EN 61131-3. Mit anderen Worten kann dem Automatisierungsdienst ein Dateneingangsstrom zur Verfügung gestellt werden, der insbesondere unter Verwendung eines Sequential Function Charts erzeugt wurde.

Die Strukturierung des Dateneingangsstromes gemäß dem JSON-Datenaustauschformat kann dabei durch das computerimplementierte Projektierungswerkzeug erfolgt sein. In diesem Fall ist der Dateneingangsstrom schon entsprechend strukturiert, wenn der Nutzer seine Anforderung an den computerimplementierten Automatisierungsdienst richtet. Die Strukturierung des Dateneingangsstromes gemäß dem JSON-Datenaustauschformat kann aber auch durch den computerimplementierten Automatisierungsdienst erfolgen. In diesem Fall ist der Dateneingangsstrom noch nicht gemäß dem JSON-Datenaustauschformat strukturiert, wenn der Nutzer seine Anforderung an den computerimplementierten Automatisierungsdienst richtet.

Das computerimplementierte Projektierungswerkzeug oder das weitere computerimplementierte Projektierungswerkzeug (also eine weiteres Projektierungswerkzeug) erzeugen die Automatisierung vorzugsweise wenigstens teilweise unter Nutzung einer grafisch orientierten Computersprache. Dadurch wird insbesondere eine weitergehende Bearbeitung und eine Übersichtlichkeit der Automatisierung für Nutzer der technischen Anlage verbessert. Insbesondere handelt es sich bei der grafisch orientierten Computersprache um ein Sequential Function Chart gemäß der Norm EN 61131-3, die im Automatisierungskontext weit verbreitet ist.

Bevorzugt stellt das neuronale Netzwerk ein Large Language Model dar. Dabei handelt es sich um ein tiefes neuronales Netzwerk, das unter anderem darauf trainiert wurde, natürliche Sprache zu verstehen und zu generieren. Bei der natürlichen Sprache handelt es sich dabei um die Anforderung, die der Nutzer an den Automatisierungsdienst richtet. Zudem wurde das Large Language Model darauf trainiert, die Auszeichnungssprache zu verstehen und erzeugen zu können, mit welcher der Dateneingangsstrom strukturiert wird.

Der Nutzer kann die Anforderung über eine Spracheingabe und eine nachfolgende Spracherkennung an den computerimplementierten Automatisierungsdienst richten. Die Verwendung einer Spracherkennung bietet dem Nutzer eine intuitive Möglichkeit, mit dem Projektierungswerkzeug oder einem weiteren Projektierungswerkzeug zu interagieren, insbesondere in Situationen, in denen das Tippen von Text unpraktisch ist.

Di zuvor genannte Aufgabe wird zudem gelöst durch ein Verfahren zum Betrieb einer technischen Anlage, bei dem zunächst ein Verfahren wie zuvor erläutert durchgeführt wird. Es wird also zunächst auf besonders vorteilhafte Art und Weise eine Automatisierung für die technische Anlage erzeugt. Im Anschluss an die Erzeugung wird die Automatisierung zum Betrieb der technischen Anlage verwendet.

Alternativ oder zusätzlich kann die erzeugte Automatisierung auch für eine Simulation eines Betriebes der technischen Anlage verwendet werden. Diese Betriebssimulation kann parallel zu einem realen Betrieb der technischen Anlage durchgeführt werden. Im Rahmen einer betriebsbegleitenden Simulation können verschiedene Szenarien in einer sicheren Umgebung getestet werden, ohne die tatsächlichen Betriebsabläufe der technischen Anlage zu beeinträchtigen. Dadurch können potenzielle Risiken und Auswirkungen identifiziert und mögliche Fehler vermieden werden. Die betriebsbegleitende Simulation kann auch als Schulungs- und Trainingsinstrument verwendet werden, um Nutzer mit den betrieblichen Abläufen der technischen Anlage vertraut zu machen.

Ein erfindungsgemäßes Computerprogramm umfasst Befehle, die bei der Ausführung des Programms durch einen Computer diesen veranlassen, ein vorstehend beschriebenes Verfahren auszuführen.

Ein erfindungsgemäßes computerlesbares Speichermedium umfasst Befehle, die bei der Ausführung durch einen Computer diesen veranlassen, ein vorstehend beschriebenes Verfahren auszuführen.

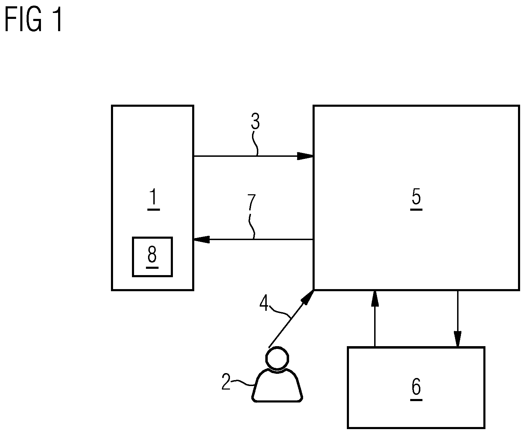

Die Erfindung sowie weitere vorteilhafte Ausgestaltungen der Erfindung gemäß Merkmalen der Unteransprüche werden im Folgenden anhand eines Ausführungsbeispielen in der Figur näher erläutert. Die Figur zeigt schematisch den Ablauf eines erfindungsgemäßen Verfahrens. In einem computerimplementierten Projektierungswerkzeug 1 steht ein Dateneingangsstrom zur Verfügung, welches das computerimplementierte Projektierungswerkzeug in unter Nutzung eines Sequential Function Charts gemäß der Norm EN 611131-3 erzeugt hat. Ein solcher Dateneingangsstrom hat beispielsweise den folgenden Inhalt:
Context: {"name": "HP-Compressor-SFC", "type": "SFC", "sequence": {"sequence": {"coid": "B1C1180500000001011000F0081CB16F06204A9A5231181F8011E5050A00000001", "elementType": "Sequence", "elements": [{"name": "Start", "isParametrized": false, "comment": "", "elementType": "StartStep", "coid":
"B1C1180500000001011000F0081CB16F06204A9A5231181F8011E5080C000000010000200 50A00000000"}, {"name": "IsStarting", "isParametrized": false, "comment": "", "elementType": "Transition", "coid":
"B1C1180500000001011000F0081CB16F06204A9A5231181F8011E5080C000000010000280 50A00000000"}, {"name": "End", "isParametrized": false, "comment": "", "elementType": "End-Step", "coid":
"B1C1180500000001011000F0081CB16F06204A9A5231181F8011E5080C000000110000200 50A00000000"} ] }, "coid":
"B1C1180500000001011000F0081CB16F06204A9A5231181F8011E5050A00000000", "name": "RUN", "elementType": "Sequencer", "chartViewEnabled": true, "chartEditEnabled": true, "textBlocks": [] } }

Ein Nutzer 2 einer technischen Anlage richtet eine Anforderung 4 an einen computerimplementierten Automatisierungsdienst 5 der technischen Anlage. Die Anforderung 4 kann beispielsweise lauten: "Please add the step warmup after start."

Der Automatisierungsdienst 5 ist wie des Projektierungswerkzeug 1 auf einem Engineering Station Server (nicht dargestellt) der technischen Anlage implementiert. Dabei stellt der Automatisierungsdienst 5 einen eigenständigen Dienst dar, der, unabhängig von dem Projektierungswerkzeug 1, auch in einer anderen Rechenumgebung, insbesondere auch in einer cloudbasierten Umgebung, implementiert sein kann. Zur Bearbeitung der Anforderung 4 nutzt der Automatisierungsdienst 5 den Dateneingangsstrom 3, der ihm von dem Projektierungswerkzeug 1, speziell für diese Anforderung 4 oder schon im Vorhinein, zur Verfügung gestellt worden ist.

Der Automatisierungsdienst 5 strukturiert dabei den Dateneingangsstrom 3 gemäß dem JSON-Datenaustauschformat und gibt den strukturierten Dateneingangsstrom 3 zusammen mit der Anforderung 4 an ein Large Language Model 6 weiter. Dieses ist auf einer cloudbasierten Rechenumgebung realisiert, insbesondere auf der gleichen wie der Automatisierungsdienst 5. Das Large Language Model 6 gibt daraufhin einen Datenausgangsstrom an den Automatisierungsdienst 5 weiter. Der computerimplementierte Automatisierungsdienst 5 strukturiert den zuvor erzeugten Datenausgangsstrom gemäß dem JSON-Datenaustausch-format und gibt den strukturierten Datenausgangsstrom 7 an das Projektierungswerkzeug 1 weiter. Ein solcher strukturierter Datenausgangsstrom hat beispielsweise den folgenden Inhalt:

```
 {
  "commands":
  [
   {
    "command": "add_sfc_step",
    "chart": "Electrolysis-SFC",
    "step_name": "Warmup",
    "transition_name": "IsWarm",
    "predecessor": "End"
   }
  ]
 }
```

Zusätzlich übermittelt der Automatisierungsdienst 5 eine Nachricht an den Nutzer 2, welche beispielsweise lauten kann: "Certainly! I added the step Warmup after IsStarting."

Auf Basis des erhaltenen, strukturierten Datenausgangsstromes 7 erzeugt das computerimplementierte Projektierungswerkzeug 1 die Automatisierung 8 auf Basis eines Sequential Function Charts gemäß der Norm EN 61131-3 für die technische Anlage, welche im Anschluss mithilfe der Automatisierung 8 betrieben wird.

Ein weiteres Beispiel für eine Anforderung 4 eines Nutzers 2 lautet: "Can you please add a stop pump before all close valve steps?"

Der von dem Automatisierungsdienst 5 unter Einbezug des Large Language Models 6 erzeugte strukturierte Datenausgangsstrom 7 lautet dann beispielsweise:

```
 {
  "commands":
  [
   {
    "command": "add_sfc_step",
    "chart": "MP-Storage-SFC",
    "step_name": "StopPump_1",
    "transition_name": "lsPumpStropped_1",
    "predecessor": "CloseValve_1"
   },
   {
    "command": "add_sfc_step",
    "chart": "MP-Storage-SFC",
    "step_name": "StopPump_2",
    "transition_name": "lsPumpStropped_2",
    "predecessor": "CloseValve_2"
   },
   {
    "command": "add_sfc_step",
    "chart": "MP-Storage-SFC",
    "step_name": "StopPump_3",
    "transition_name": "lsPumpStropped_3",
    "predecessor": "CloseValve_3"
   }
  ]
 }
```

Der Automatisierungsdienst 5 übermittelt daraufhin eine Nachricht an den Nutzer 2, welche lautet: "I added stop pump steps to CloseValve_1, CloseValve_2 and CloseValve_3."

Ein weiteres Beispiel für eine Anforderung 4 eines Nutzers 2 lautet: "Please implement the following process description:
Process Description". Diese "Process Description" muss der Nutzer dem Automatisierungsdienst 5 in einer geeigneten Textform zur Verfügung stellen.

Der von dem Automatisierungsdienst 5 unter Einbezug des Large Language Models 6 erzeugte strukturierte Datenausgangsstrom 7 lautet dann beispielsweise:

```
 {
  "commands":
  [
   {
    "command": "add_sfc_step",
    "chart": "HP-Compressor-SFC",
    "step_name": "TakeToAuto",
    "transition_name": "IsAIIAuto",
    "predecessor": "End"
   },
   {
    "command": "add_sfc_alternative_branch",
    "chart": "HP-Compressor-SFC",
    "prev_step_name": "Ready",
    "left entry_transition_name": "lsN2Purge",
    "left step_name": "N2Pumping",
    "left exit transition_name": "IsN2Purged",
    "right_entry_transition_name": "IsH2Purge",
    "right_step_name": "H2Pumping",
    "right_exit_transition_name": "IsH2Purged",
    "predecessor": "End"
   },
   {
    "command": "add_sfc_step",
    "chart": "HP-Compressor-SFC",
    "step_name": "BlowOff_1",
    "transition_name": "IsBlownOff_1",
    "predecessor": "N2Pumping"
   },
   {
    "command": "add_sfc_step",
    "chart": "HP-Compressor-SFC",
    "step_name": "OpenN2lnlet",
    "transition_name": "lsN2lnletOpen",
    "predecessor": "N2Pumping"
   },
   {
    "command": "add_sfc_step",
    "chart": "HP-Compressor-SFC",
    "step_name": "RecyclelnletN2",
    "transition_name": "lsRecyclinglnletN2",
    "predecessor": "N2Pumping"
   },
   {
    "command": "add_sfc_step",
    "chart": "HP-Compressor-SFC",
    "step_name": "BlowOff_2",
    "transition_name": "IsBlownOff_2",
    "predecessor": "H2Pumping"
   },
   {
    "command": "add_sfc_step",
    "chart": "HP-Compressor-SFC",
    "step_name": "OpenH2lnlet",
    "transition_name": "lsH2lnletOpen",
    "predecessor": "H2Pumping"
   },
   {
    "command": "add_sfc_step",
    "chart": "HP-Compressor-SFC",
    "step_name": "RecyclelnletH2",
    "transition_name": "lsRecyclinglnletH2",
    "predecessor": "H2Pumping"
    }
  ]
 }
```

Der Automatisierungsdienst 5 übermittelt daraufhin eine Nachricht an den Nutzer 2, welche lautet: "Here is an implementation of a H2 Compressor."

## Patentansprüche

1. Verfahren zur Erzeugung einer Automatisierung (8) für eine technische Anlage, insbesondere Prozess- oder Fertigungsanlage, umfassend:
a) Richten einer Anforderung (4) zur Erzeugung der Automatisierung (8) an einen computerimplementierten Automatisierungsdienst (5) unter Einbezug eines Dateneingangsstromes (3) durch einen Nutzer (2) der technischen Anlage,
b) Erzeugen eines Datenausgangsstromes aus dem mit einer Auszeichnungssprache, insbesondere gemäß dem JSON-Datenaustauschformat, strukturierten Dateneingangsstrom (3) unter Nutzung eines neuronalen Netzwerkes (6) durch den computerimplementierten Automatisierungsdienst (5),
c) Strukturieren des zuvor erzeugten Datenausgangsstromes mit der Auszeichnungssprache, insbesondere gemäß dem JSON-Datenaustauschformat, durch den computerimplementierten Automatisierungsdienst (5),
d) Übermitteln des zuvor erzeugten strukturierten Datenausgangsstromes (7) an ein computerimplementiertes Projektierungswerkzeug (1),
e) Erzeugen der Automatisierung (8) für die technische Anlage auf Basis des strukturierten Datenausgangsstromes (7) durch das computerimplementierte Projektierungswerkzeug (1) oder durch ein weiteres computerimplementiertes Projektierungswerkzeug.

2. Verfahren nach Anspruch 1, bei dem der Dateneingangsstrom (3) einem computerimplementierten Projektierungswerkzeug (1) entstammt, welches den Dateneingangsstrom (3) wenigstens teilweise unter Nutzung einer grafisch orientierten Computersprache erzeugt hat, insbesondere eines Sequential Function Charts gemäß der Norm EN 61131-3.

3. Verfahren nach Anspruch 1 oder 2, bei dem der Dateneingangsstrom durch das computerimplementierte Projektierungswerkzeug (1) oder durch den computerimplementierten Automatisierungsdienst (5) mit der Auszeichnungssprache, insbesondere gemäß dem JSON-Datenaustauschformat, strukturiert wird.

4. Verfahren nach Anspruch 1, bei dem das computerimplementierte Projektierungswerkzeug (1) die Automatisierung (8) wenigstens teilweise unter Nutzung einer grafisch orientierten Computersprache erzeugt.

5. Verfahren nach Anspruch 4, bei dem die grafisch orientierte Computersprache ein Sequential Function Chart gemäß der Norm EN 61131-3 darstellt.

6. Verfahren nach einem der vorangegangenen Ansprüche, bei dem das neuronale Netzwerk (6) ein Large Language Model (6) darstellt.

7. Verfahren nach einem der vorangegangenen Ansprüche, bei dem der Nutzer (2) die Anforderung (4) über eine Texteingabe an den computerimplementierten Automatisierungsdienst (5) richtet.

8. Verfahren nach einem der vorangegangenen Ansprüche, bei dem der Nutzer (2) die Anforderung (4) über eine Spracheingabe und eine nachfolgende Spracherkennung an den computerimplementierten Automatisierungsdienst (5) richtet.

9. Verfahren zum Betrieb einer technischen Anlage, insbesondere Prozess- oder Fertigungsanlage, bei dem zunächst ein Verfahren gemäß einem der Ansprüche 1 bis 8 durchgeführt wird und im Anschluss die erzeugte Automatisierung (8) zum Betrieb der technischen Anlage verwendet wird.

10. Verfahren zum Betrieb einer technischen Anlage, insbesondere Prozess- oder Fertigungsanlage, bei dem zunächst ein Verfahren gemäß einem der Ansprüche 1 bis 8 durchgeführt wird und im Anschluss die erzeugte Automatisierung (8) für eine Simulation eines Betriebes der technischen Anlage verwendet wird, insbesondere parallel zu einem realen Betrieb der technischen Anlage.

11. Computerimplementierter Automatisierungsdienst, der zur Durchführung eines Verfahrens gemäß einem der Ansprüche 1 bis 8 ausgebildet ist.

12. Engineering Station Server für eine technische Anlage, insbesondere Prozess- oder Fertigungsanlage, auf dem ein Automatisierungsdienst (5) und ein Projektierungswerkzeug (1) gemäß einem der Ansprüche 1 bis 8 computerimplementiert sind.
